# EUROPÄISCHE PATENTSCHRIFT

(11) **EP 0 645 290 B1**
(45) Veröffentlichungstag und Bekanntmachung des Hinweises auf die Patenterteilung: **08.01.1997**
(21) Anmeldenummer: 94114440.4
(22) Anmeldetag: 14.09.1994
(51) Int. Cl.: B60T 13/567

(54) **Kraftverstärkergehäuse, insbesondere für Kraftfahrzeugbremsanlagen, und Verfahren zum Zusammenbauen eines solchen Kraftverstärkergehäuses**
Power booster case, especially for motor vehicle braking systems, and method for assembling or putting together such power booster case
Cage d'amplificateur de force, en particulier pour installation de frein de véhicule, et procédé pour l'assemblage d'une telle cage d'amplificateur de force

(30) Priorität: 24.09.1993 DE 4332611
(43) Veröffentlichungstag der Anmeldung: 29.03.1995
(73) Patentinhaber: LUCAS INDUSTRIES public limited company, Solihull, West Midlands B91 3TX (GB)
(72) Erfinder: Schlüter, Peter, D-56206 Kammerforst (DE); Zeuner, Lothar, D-57518 Steineroth (DE)
(74) Vertreter: Goetz, Rupert, Dipl.-Ing.

(56) Entgegenhaltungen:
- EP-A- 0 233 026
- EP-A- 0 592 247
- DE-A- 4 202 820
- DE-A- 4 204 419
- GB-A- 2 122 705
- GB-A- 2 127 504
- US-A- 4 433 614

## Beschreibung

Die Erfindung betrifft ein Kraftverstärkergehäuse, insbesondere für Fahrzeugbremsanlagen, mit
- zwei Gehäuseböden, die auf je einer Seite einer beweglichen Zwischenwand angeordnet sind und Befestigungslöcher aufweisen,
- Anschlußkörpern, die an mindestens einem der Gehäuseböden angeordnet und mit diesem rings um je eines seiner Befestigungslöcher dicht verstemmt sind, und
- Abstandhaltern, die sich zwischen den beiden Gehäuseböden sowie durch die bewegliche Zwischenwand hindurcherstrecken und an den Anschlußkörpern befestigt sind.

Bei einem bekannten Kraftverstärkergehäuse (DE 42 02 820 A1) sind die Abstandhalter Rohre, die sich parallel zur üblicherweise in Fahrzeuglängsrichtung angeordneten Hauptachse des zugehörigen Kraftverstärkergehäuses durch dieses hindurch von vorne nach hinten erstrecken, an ihrem vorderen Ende mit einem hülsenförmigen vorderen Anschlußkörper verschweißt und mit ihrem hinteren Ende in einen ringförmigen hinteren Anschlußkörper eingeschraubt sind. Die Schraubverbindung des hinteren Endes jedes Abstandhalters mit dem hinteren Anschlußkörper ermöglicht eine Justierung der wirksamen Gesamtlänge jedes einzelnen Abstandhalters. Aus diesem Grund lohnt sich im allgemeinen der nicht vernachlässigbare fertigungstechnische Aufwand für das Herstellen der nötigen Schraubgewinde, die eine luftdichte Gewindepaarung ergeben. Die erforderliche mechanisch feste und zugleich luftdichte Verbindung jedes Abstandhalters mit dem zughörigen vorderen Anschlußkörper wird bisher durch elektrisches Widerstandsschweißen hergestellt. Dies ist ein im Vergleich zur Herstellung einer Schraubverbindung zeit- und kostensparendes Verfahren, an das sich allerdings in manchen Fällen eine Wärmebehandlung anschließen muß, um Bruchgefahren durch Versprödung zu vermeiden. Unabhängig davon kann es vorkommen, daß Spritzer des beim Schweißen verflüssigten Metalls der Abstandhalter sich an deren äußerer Mantelfläche niederschlagen und im Laufe der Zeit die Abdichtung der beweglichen Zwischenwand gegenüber den Abstandhaltern beschädigen.

Das "Handbuch der Fertigungstechnik", Band 5, Prof. Dr.-Ing. Dr. h.c. Günter Spur, Carl Hanser Verlag München Wien, 1986, beschreibt unterschiedliche Verfahren zum Zusammenpressen von Teilen, die nur elastisch verformt werden und durch Kraftschluß zusammengehalten werden. Darüber hinaus ist in diesem Dokument das Verfahren des Kaltpreßschweißens beschrieben.

Der Erfindung liegt die Aufgabe zugrunde, bei einem Kraftverstärkergehäuse der eingangs beschriebenen Gattung eine feste und luftdichte Verbindung zwischen jedem Abstandhalter und mindestens einem der zugehörigen Anschlußkörper auf noch einfachere Weise herzustellen, die zudem eine Verschlechterung der Oberflächengüte der Abstandhalter nicht befürchten läßt.

Die Aufgabe ist erfindungsgemäß ausgehend von einem Kraftverstärkergehäuse der genannten Gattung durch die Merkmale des Anspruchs 1 gelöst.

Vorteilhafte Weiterbildungen des erfindungsgemäßen Kraftverstärkergehäuses ergeben sich aus den Ansprüchen 2 und 3.

Gegenstand der Erfindung ist ferner ein Verfahren zum Zusammenbauen eines Kraftverstärkergehäuses der genannten Gattung. Das erfindungsgemäße Verfahren wird in folgenden Arbeitsschritten durchgeführt:
- Einschieben eines Endabschnitts eines Abstandhalters in eine Ausnehmung eines Anschlußkörpers,
- Hindurchstecken des Anschlußkörpers durch ein Befestigungsloch in einem Gehäuseboden derart, daß ein am Anschlußkörper ausgebildeter Bund durch das Befestigungsloch hindurchragt, und
- gleichzeitiges Verstemmen des Anschlußkörpers mit dem Gehäuseboden und dem Abstandhalter.

Das erfindungsgemäße Verfahren kostet - abgesehen von allenfalls geringfügig größerem Aufwand für die Vorrichtung zur Durchführung des Verfahrens - nicht mehr als das bekannte Verstemmen von Anschlußkörpern mit dem zugehörigen Gehäuseboden. Die erfindungsgemäße Verstemmung des Abstandshalters mit dem Anschlußkörper findet in der selben Zeit statt, die zum Verstemmen des Anschlußkörpers mit dem zugehörigen Gehäuseboden ohnehin aufgewandt werden muß. Es hat sich erwiesen, daß der zum Verstemmen eines Anschlußkörpers mit dem zugehörigen Gehäuseboden erforderliche axiale Druck bei geeigneter Gestaltung der zum Verstemmen verwendeten Werkzeuge auch ausreicht, um den Anschlußkörper mit dem zugehörigen Abstandhalter luftdicht und mechanisch ausreichend fest zu verstemmen.

Eine Weiterbildung des erfindungsgemäßen Verfahrens ist Gegenstand des Anspruchs 5.

Je ein Ausführungsbeispiel eines erfindungsgemäßen Kraftverstärkergehäuses sowie zweier Vorrichtungen zum Verstemmen werden im folgenden anhand schematischer Zeichnungen näher erläutert. In diesen zeigen:
- Fig. 1: einen Axialschnitt durch ein Kraftverstärkergehäuse,
- Fig. 2: einen Ausschnitt aus Fig. 1 vor dem Verstemmen,
- Fig. 3: einen entsprechenden Ausschnitt nach dem Verstemmen,
- Fig. 4: einen Ausschnitt entsprechend Fig. 2 mit Abwandlungen, vor dem Verstemmen, und
- Fig. 5: den Ausschnitt wie in Fig. 4, jedoch nach dem Verstemmen.

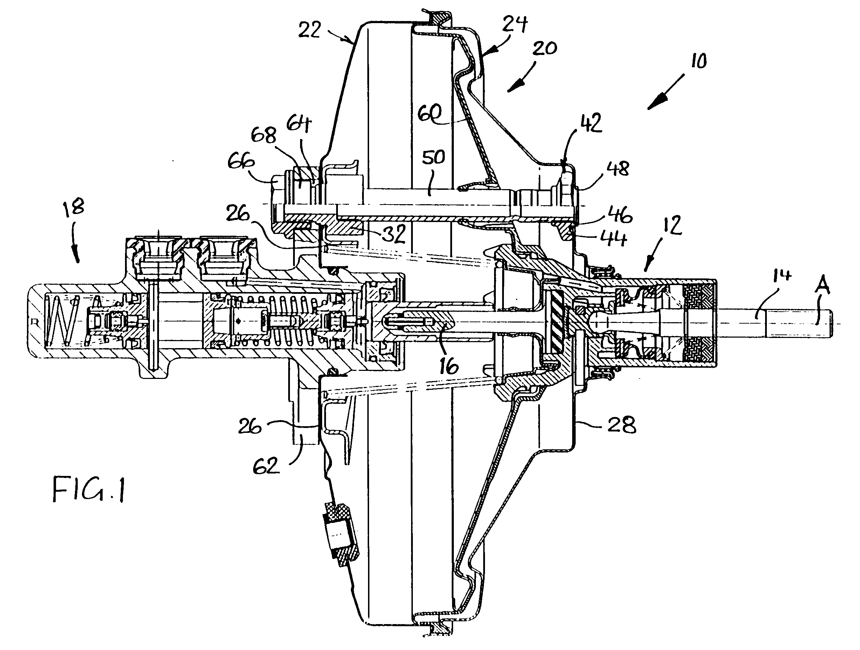

In Fig. 1 ist ein pneumatischer Bremskraftverstärker 10 mit Steuerventil 12 für eine hydraulische Kraftfahrzeug-Bremsanlage dargestellt. Das Steuerventil 12 ist mit einer Betätigungsstange 14 betätigbar, und der Bremskraftverstärker 10 betätigt seinerseits über eine Kraftabgabestange 16 einen hydraulischen Hauptbremszylinder 18.

Der Bremskraftverstärker 10 hat ein Kraftverstärkergehäuse 20, das im wesentlichen symmetrisch in Bezug auf eine in Fig. 1 - wie auch in üblicher Einbaulage - waagerechte Achse A gestaltet und aus einem vorderen Gehäuseteil 22 sowie einem hinteren Gehäuseteil 24 zusammengesetzt ist. Die beiden Gehäuseteile 22 und 24 haben einen zur Achse A im wesentlichen normalen vorderen bzw. hinteren Gehäuseboden 26 bzw. 28.

Aus dem vorderen Gehäuseboden 26 sind, einander in Bezug auf die Achse A diametral gegenüberliegend, zwei Befestigungslöcher 30 ausgestanzt, in denen je ein vorderer Anschlußkörper 32 befestigt ist. Die vorderen Anschlußkörper 32, von denen in den Zeichnungen nur je einer dargestellt ist, sind als Drehteile hergestellt und haben je einen Flansch 34, der von hinten her am vorderen Gehäuseboden 26 anliegt, sowie einen im wesentlichen zylindrischen Bund 36, der sich durch das zugehörige Befestigungsloch 30 hindurcherstreckt und vorne einen Gewindezapfen 38 aufweist. Die vorderen Anschlußkörper 32 sind durchgehend hohl und haben in ihrem hinteren Bereich je eine erweiterte zylindrische Ausnehmung 40.

Dem hinteren Gehäuseboden 28 ist ein Paar hinterer Anschlußkörper 42 zugeordnet, die mit je einem der vorderen Anschlußkörper 32 fluchten und ebenfalls je einen Flansch 44 und einen Bund 46 aufweisen, wobei der Flansch 44 von innen her am hinteren Gehäuseboden 28 anliegt und der Bund 46 sich durch ein Befestigungsloch 48 im hinteren Gehäuseboden 28 hindurch nach hinten erstreckt.

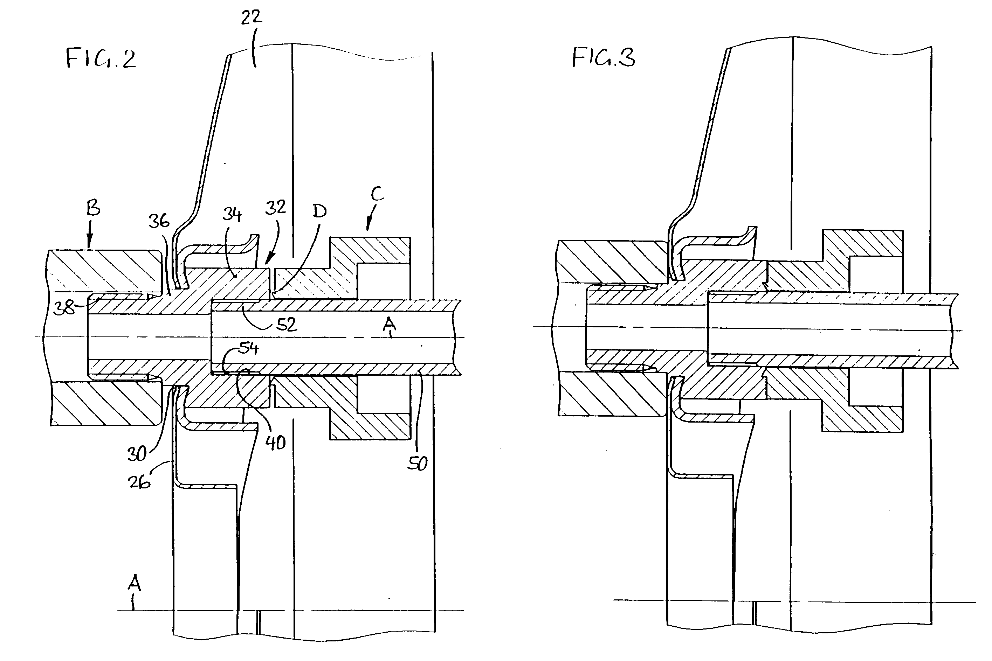

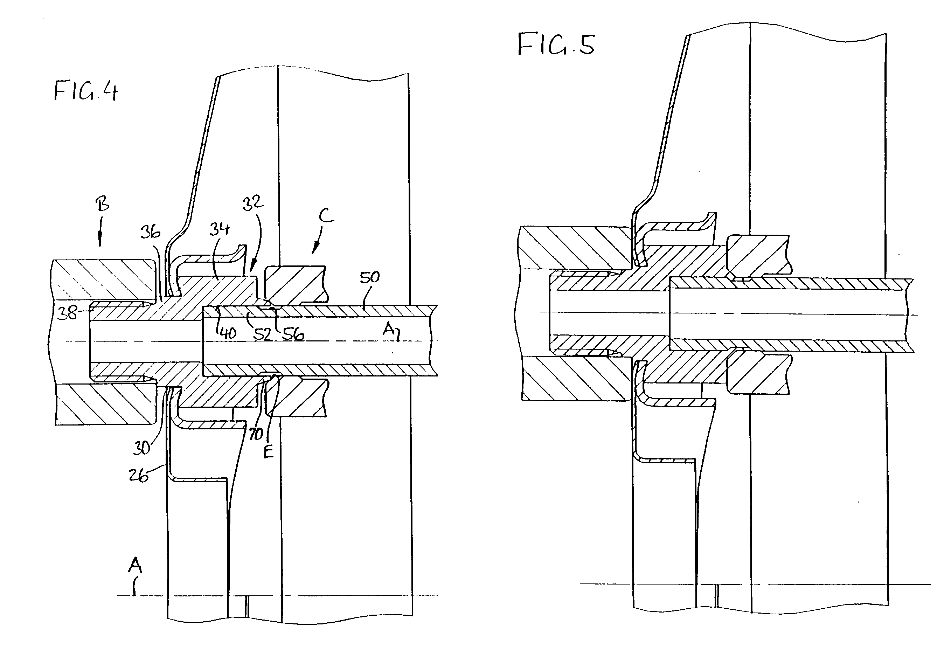

Jedem Paar miteinander fluchtender Anschlußkörper 32 und 42 ist ein rohrförmiger Abstandhalter 50 zugeordnet, der mit einem vorderen Endabschnitt 52 in die erweiterte zylindrische Ausnehmung 40 des zugehörigen vorderen Anschlußkörpers 32 eingreift. Gemäß Fig. 2 und 3 ist der vordere Abschnitt 52 jedes Abstandhalters 50 mit einer Rändelung 54 versehen. Gemäß Fig. 4 und 5 ist hingegen am Übergang zwischen dem vorderen Endabschnitt 52 und dem dahinterliegenden Hauptteil jedes Abstandhalters 50 eine Ringnut 56 eingestochen. Jeder der beiden Abstandhalter 50 hat gemäß Fig. 1 einen hinteren Endabschnitt, der in den zugehörigen hinteren Anschlußkörper 42 in herkömmlicher Weise einstellbar eingeschraubt ist.

Zwischen äußeren Randbereichen der beiden Gehäuseteile 22 und 24 ist gemäß Fig. 1 ein wulstartiger äußerer Randbereich einer beweglichen Zwischenwand 60 fest und dicht eingespannt. Am vorderen Gehäuseboden 26 ist ein Flansch 62 des Hauptbremszylinders 18 anliegend gehalten. Der Flansch 62 hat ein Paar Löcher 64, die den Gewindezapfen 38 je eines der beiden vorderen Anschlußkörper 32 aufnehmen. Auf die Gewindezapfen 38 ist je eine Mutter 66 aufgeschraubt, die mit einem an ihr ausgebildeten, außen glatten zylindrischen Ansatz 68 in das zugehörige Loch 64 des Flansches 62 eingreift.

Zum dichten Zusammenbauen der vorderen Anschlußkörper 32 mit dem vorderen Gehäuseboden 26 einerseits und dem zugehörigen Abstandhalter 50 andererseits wird dieser mit seinem vorderen Endabschnitt 52 in die Ausnehmung 40 des zugehörigen vorderen Anschlußkörpers 32 eingeschoben, und dessen Bund 36 wird durch das zugehörige Befestigungsloch 30 des vorderen Gehäusebodens 26 hindurchgesteckt und von einem ringförmigen Werkzeugteil B aufgenommen. Der Abstandhalter 50 erstreckt sich durch ein ebenfalls ringförmiges Werkzeugteil C hindurch. Durch festes, beispielsweise hydraulisches, Zusammenpressen der beiden Werkzeugteile B und C wird jeder der vorderen Anschlußkörper 32 gleichzeitig mit dem vorderen Gehäuseboden 26 und dem zugehörigen Abstandhalter 50 fest und dicht verstemmt. Dies gilt für beide in Fig. 2 und 3 einerseits sowie in Fig. 4 und 5 andererseits dargestellten Verfahrensweisen.

Gemäß Fig. 2 und 3 wird der Flansch 34 jedes der beiden vorderen Anschlußkörper 32 durch die von den werkzeugteilen B und C ausgeübten, zueinander hin gerichteten Kräfte derart gestaucht, daß ein Teil des den Flansch 34 bildenden Materials in die Rändelung 54 am vorderen Endabschnitt 52 des zugehörigen Abstandhalters 50 eindringt. Um dies zu fördern, hat das Werkzeugteil C gemäß Fig. 2 und 3 einen scharfkantigen ringförmigen Vorsprung D, der außen durch eine Zylinderfläche und innen durch eine Hohlkegelfläche begrenzt ist.

Gemäß Fig. 4 und 5 ist an der in Bezug auf das Kraftverstärkergehäuse 20 inneren Stirnseite des Flansches 34 jeder der vorderen Anschlußkörper 32 ein ringförmiger Vorsprung 70 ausgebildet, der vom Werkzeugteil C in die Ringnut 56 hineingedrückt wird. Um dies zu bewirken, hat das Werkzeugteil C eine den ringförmigen Vorsprung 70 übergreifende Hohlkegelfläche E.

## Patentansprüche

1. Kraftverstärkergehäuse, insbesondere für Fahrzeugbremsanlagen, mit
- zwei Gehäuseböden (26, 28), die auf je einer Seite einer beweglichen Zwischenwand (60) angeordnet sind und Befestigungslöcher (30, 48) aufweisen,
- Anschlußkörpern (32), die an mindestens einem der Gehäuseböden (26) angeordnet und mit diesem rings um je eines seiner Befestigungslöcher (30) dicht verstemmt sind, und
- Abstandhaltern (50), die sich zwischen den beiden Gehäuseböden (26, 28) sowie durch die bewegliche Zwischenwand (60) hindurch erstrecken und an den Anschlußkörpern (32) befestigt sind,
dadurch **gekennzeichnet**, daß
die Anschlußkörper (32) je eine Ausnehmung (40) aufweisen, in der ein Endabschnitt (52) des zugehörigen Abstandhalters (50) eingeschoben und verstemmt ist.

2. Kraftverstärkergehäuse nach Anspruch 1,
dadurch **gekennzeichnet**, daß
der Endabschnitt (52) des Abstandhalters eine Rändelung (54) aufweist.

3. Kraftverstärkergehäuse nach Anspruch 1 oder 2,
dadurch **gekennzeichnet**, daß
der Endabschnitt (52) des Abstandhalters (50) eine Ringnut (56) aufweist, und daß am zugehörigen Anschlußkörper (32) ein ringförmiger Vorsprung (70) ausgebildet ist, der durch das Verstemmen mindestens teilweise in die Ringnut (56) eingedrückt ist.

4. Verfahren zum Zusammenbauen eines Kraftverstärkergehäuses nach einem der Ansprüche 1 bis 3,
**gekennzeichnet** durch die Arbeitsschritte:
- Einschieben eines Endabschnitts (52) eines Abstandhalters (50) in eine Ausnehmung (40) eines Anschlußkörpers (32),
- Hindurchstecken des Anschlußkörpers (32) durch ein Befestigungsloch (30) in einem Gehäuseboden (26) derart, daß ein am Anschlußkörper (32) ausgebildeter Bund (36) durch das Befestigungsloch (30) hindurchragt, und
- gleichzeitiges Verstemmen des Anschlußkörpers (32) mit dem Gehäuseboden (26) und dem Abstandhalter (50).

5. Verfahren nach Anspruch 4,
dadurch **gekennzeichnet**, daß
der Anschlußkörper (32) an der Vorderseite eines an ihm ausgebildeten Flansches (34) mit dem Gehäuseboden (26), und an der Rückseite desselben Flansches (34) mit dem Abstandhalter (50) verstemmt wird.

## Claims

1. A booster housing, especially for vehicle brake systems, comprising
- two housing bottoms (26, 28) which are disposed at either side of a movable partition (60) and are provided with fastening holes (30, 48),
- connecting members (32) which are mounted on at least one of the housing bottoms (26) and are tightly crimped with the same around one of its fastening holes (30) each, and
- spacers (50) which extend between the two housing bottoms (26, 28) as well as through the movable partition (60) and are fixed to the connecting members (32),
**characterized** in that
each of the connecting members (32) has a recess (40) into which an end portion (52) of the associated spacer (50) is inserted and crimped.

2. The booster housing as defined in claim 1
**characterized** in that
the end portion (52) of the spacer comprises a knurled portion (54).

3. The booster housing as defined in claim 1 or claim 2
**characterized** in that
the end portion (52) of the spacer (50) is provided with an annular groove (56) and that an annular projection (70) is formed on the associated connecting member (32) and is pressed into the annular groove (56) at least partly by the crimping operation.

4. A method of assembling a booster housing as defined in any one of claims 1 to 3
**characterized** by the steps:
- inserting an end portion (52) of a spacer (50) into a recess (40) of a connecting member (32),
- passing the connecting member (32) through a fastening hole (30) in a housing bottom (26) in such a way that a collar (36) formed on the connecting member (32) extends through the fastening hole (30), and
- simultaneous crimping of the connecting member (32) with the housing bottom (26) and the spacer (50).

5. The method as defined in claim 4,
**characterized** in that
on the front side of a flange (35) formed on the connecting member (32) said connecting member is crimped with the housing bottom (26), and on the rear side of the same flange (34) it is crimped with the spacer (50).

## Revendications

1. Boîtier d'amplificateur de freinage, en particulier pour installations de freinage de véhicules, comprenant
- deux fonds de boitier (26, 28) qui sont disposés chacun d'un côté d'une cloison intermédiaire mobile (60) et qui présentent des trous de fixation (30, 48),
- des éléments de raccordement (32) qui sont disposés sur au moins un des fonds de boîtier (26) et qui sont matés hermétiquement avec celui-ci tout autour de chacun de ses trous de fixation (30), et
- des entretoises (50) qui s'étendent entre les deux fonds de boitier (26, 28) ainsi qu'au travers de la cloison intermédiaire mobile (60) et sont fixées aux éléments de raccordement (32),
caractérisé en ce que
les éléments de raccordement (32) présentent chacun un creux (40) dans lequel une portion d'extrémité (52) de l'entretoise associée (50) est introduite par coulissement et matée.

2. Boîtier d'amplificateur de freinage selon la revendication 1,
caractérisé en ce que
la portion d'extrémité (52) de l'entretoise présente un moletage (54).

3. Boitier d'amplificateur de freinage selon la revendication 1 ou 2,
caractérisé en ce que
la portion d'extrémité (52) de l'entretoise (50) présente une gorge annulaire (56) et en ce qu'une avancée annulaire (70) est formée sur l'élément de raccordement (32) associé, qui est pressée au moins partiellement dans la gorge annulaire (56) par le matage.

4. Procédé d'assemblage d'un boitier d'amplificateur de freinage selon l'une quelconque des revendications 1 à 3,
caractérisé par les étapes consistant à :
- introduire une portion d'extrémité (52) d'une entretoise (50) dans un creux (40) d'un élément de raccordement (32),
- faire traverser à l'élément de raccordement (32) un trou de fixation (30) d'un fond de boîtier (26) de telle façon qu'un épaulement (36) formé sur l'élément de raccordement (32) dépasse à travers le trou de fixation (30), et
- mater simultanément l'élément de raccordement (32) avec le fond de boitier (26) et l'entretoise (50).

5. Procédé selon la revendication 4,
caractérisé en ce que
l'élément de raccordement (32) est maté du côté avant d'un about formé sur lui (34) avec le fond de boîtier (26) et du côté arrière du même about (34) avec l'entretoise (50).
